# EUROPÄISCHE PATENTSCHRIFT

(11) **EP 4 500 037 B1**
(45) Veröffentlichungstag und Bekanntmachung des Hinweises auf die Patenterteilung: **07.05.2025**
(21) Anmeldenummer: 23736607.5
(22) Anmeldetag: 14.06.2023
(51) Int. Cl.: F16B 35/04, F16B 43/02, A47G 1/16

(54) **BEFESTIGUNGSELEMENT**
SECURING ELEMENT
ÉLÉMENT DE FIXATION

(43) Veröffentlichungstag der Anmeldung: 05.02.2025
(73) Patentinhaber: Zaman, Daniel, 1050 Wien (AT); Wastian, Andreas, 1030 Wien (AT)
(72) Erfinder: Zaman, Daniel, 1050 Wien (AT); Wastian, Andreas, 1030 Wien (AT)
(74) Vertreter: Schardmüller Gall-Schuhmann Patentanwälte OG
(86) Internationale Anmeldenummer: PCT/EP2023/066016
(87) Internationale Veröffentlichungsnummer: WO 2024/256004

(56) Entgegenhaltungen:
- CN-A- 107 467 988
- CN-A- 107 647 710
- DE-U1- 202021 101 158
- US-B1- 7 654 500

## Beschreibung

Die vorliegende Erfindung betrifft ein Befestigungselement zur höhenverstellbaren Befestigung von Bildern.

### Stand der Technik

Die langjährige Erfahrung beim Aufhängen von Bildern und Bildwerken, insbesondere im Bereich der Kunst, und der dabei kontinuierlich auftretenden Komplikationen
- durch verschiedenste bauliche Voraussetzungen der Ausstellungsräume und Flächen wie Raumschrägen, brüchige Wände, alte Baumassen, und dergleichen, oder
- durch spezielle Gestaltungskonzepte seitens der Künstler:innen wie beispielsweise die Komposition mehrerer kleinerer Formate zu größeren Bildeinheiten,
hat die Notwendigkeit nach einem stufenlos justierbaren Befestigungselement zur nachträglich vertikalen Ausrichtung von Bildern bzw. Bildwerken offengelegt.

Bei der Hängung von Bildern/ Bilderrahmen bzw. von zusammengehörenden Bildwerken ergibt sich oftmals das Problem, dass Befestigungselemente exakt in der Höhe ausgerichtet werden müssen, um eine waagrechte bzw. gerade Hängung der Bilder bzw. Bilderrahmen zu ermöglichen. Insbesondere wenn mehrere Bilder in einer Reihe gehängt werden sollen, stellt die Ausrichtung und Justierung der Befestigungselemente eine große Herausforderung dar, da einerseits Bohrlöcher nicht exakt gesetzt werden können und andererseits Bilderrahmen oft nicht exakt gleich in Höhe und Dimension beschaffen sind. Es ergibt sich somit der Bedarf die einzelnen Befestigungselement nach Montage in der Höhe ausrichten bzw. justieren zu können.

Aus DE 20 2017 006 535 U1 sind im wesentlichen kreisrunde Bildaufhänger bekannt, welche exzentrische Bohrungen aufweisen. Bei Montage des Bildaufhängers durch die exzentrische Bohrung, lässt sich ein unterschiedlicher Hub - je nach Rotationsstellung des Bildaufhängers - erreichen. Derartige Bildaufhänger haben jedoch den Nachteil, dass diese mit einer speziell ausgestalteten Montageleiste an einem Bilderrahmen zusammenwirken, um eine sichere Montage desselben zu ermöglichen. Derartige Befestigungselemente können somit keine von der Montageleiste unabhängige Befestigung beliebiger Bilderrahmen ermöglichen.

Aus WO 97/32508 A1 sind Befestigungselemente zur Wandmontage von Möbelstücken bekannt, welche als Polygon mit sieben vom Mittelpunkt unterschiedlich weit entfernten Seitenflächen ausgebildet sind. Durch Drehung des Befestigungselements um eine zentrale Bohrung können die Seitenflächen zur Auflagerung des Möbelstücks gewechselt werden, wodurch eine Höhenverstellung erreicht wird. Solche Befestigungselemente ermöglichen zwar durch die jeweils geraden Seitenflächen einen hohen Lastabtrag, sind jedoch in der Anzahl der möglichen Stellungen begrenzt. Zudem sind derartige Befestigungselemente besonders unter Belastung nicht leicht zu verstellen, da ein Wechsel der geraden Seitenflächen eine Drehung über einen Eckpunkt (mit deutlichem Hub der Belastung) erfordert.

Aus CN 107 467 988 A ist zudem ein Befestigungselement gemäß dem Oberbegriff des Anspruchs 1 bekannt.

### Offenbarung der Erfindung

Die vorliegende Erfindung hat sich daher die Aufgabe gestellt, ein Befestigungsmittel der eingangs erwähnten Art bereitzustellen, welches einfach in der Höhe zu verstellen ist und zugleich eine sichere Auflagefläche zur Befestigung von Bilderrahmen mit hohem Lastabtrag ermöglicht, somit zur universellen Befestigung von Bilderrahmen unterschiedlicher Art geeignet ist.

Die Erfindung löst die gestellte Aufgabe durch den Gegenstand des unabhängigen Patentanspruchs 1. Bevorzugte Ausgestaltungen ergeben sich aus den abhängigen Patentansprüchen, sowie aus den in weiterer Folge dargestellten Ausführungsvarianten.

Gemäß einem Aspekt weist das Befestigungselement erfindungsgemäß einen Körper mit einer Vorderseite, einer Rückseite und einer Bohrung auf, wobei die Bohrung das Befestigungselement entlang einer Bohrungsachse von der Vorderseite zur Rückseite durchdringt und zur Befestigung des Befestigungselements an einer Wand mittels eines Befestigungsmittels in einem Rotationswinkel gegenüber einer vertikalen Richtung ausgebildet ist.

Durch die Bohrungsachse, welche das Befestigungselement von der Vorderseite zur Rückseite hin durchdringt, kann eine freie Rotation des Befestigungselements um die Bohrungsachse ermöglicht werden, wenn das Befestigungselement mittels eines Befestigungsmittels durch die Bohrung an einer Wand befestigt wird. Der Rotationswinkel des Befestigungselements kann so beliebig durch Drehen um das Befestigungsmittel bzw. um die Bohrungsachse eingestellt werden.

Gemäß einem weiteren Aspekt weist der Körper des Befestigungselements eine vordere Mantelfläche auf, welche einen Auflagebereich des Befestigungselements ausbildet und sich zwischen einer vorderen Außenkontur an der Vorderseite und einer mittleren Außenkontur erstreckt, wobei vordere und mittlere Außenkontur an zumindest zwei Punkten einen unterschiedlichen Abstand zur Bohrungsachse aufweisen

Durch den Auflagebereich an der Vorderseite des Befestigungselements kann eine sichere Auflage für den Bilderrahmen geschaffen werden, welche sich durch Rotation des Befestigungselements um die Bohrungsachse in ihrer Höhe verstellen lässt. Hierzu wird der Auflagebereich durch die verbindende Mantelfläche zwischen einer vorderen Außenkontur an der Vorderseite und einer mittleren Außenkontur des Befestigungselements ausgebildet, wobei die vordere und mittlere Außenkontur jeweils so beschaffen sind, dass diese bei Rotation um die Bohrungsachse einen unterschiedlichen Abstand zu dieser aufweisen und so die Höhenverstellung des Befestigungselements zur Montage von Bildern ermöglichen.

Gemäß einem weiteren Aspekt weist das Befestigungselement erfindungsgemäß zudem eine sich zur Rückseite hin verjüngende hintere Mantelfläche auf, welche einen Haltebereich des Befestigungselements ausbildet und sich zwischen einer hinteren Außenkontur an der Rückseite und der mittleren Außenkontur erstreckt.

Durch den Haltebereich kann ein einfaches Greifen und Verstellen des Befestigungselements ohne spezielles Werkzeug ermöglicht werden. Die sich zur Rückseite hin verjüngende hintere Mantelfläche ermöglicht dabei durch ihre zusammenlaufende Form ein komfortables und sicheres Greifen und Verdrehen des Befestigungselements um die Bohrungsachse per Hand, selbst wenn das Befestigungselement bereits durch das Befestigungsmittel mit einer Wand verbunden und leicht angezogen ist. Wird das Befestigungsmittel stärker angezogen, so kann durch die verjüngte hintere Außenkontur und die damit einhergehende verkleinerte Auflagefläche zur Wand hin, eine verdrehungssichere Befestigung des Befestigungselements ermöglicht werden. Die kleinere Auflagefläche hat dabei die Tendenz sich beim Anziehen des Befestigungsmittels in das Mauerwerk einzusinken, wodurch hohe Reibungskräfte zwischen Befestigungselement und Wand erreicht werden, welche einer unabsichtlichen Rotation des Befestigungselements entgegenwirken. Ein Befestigungselement mit hohem Lastabtrag, beispielsweise durch einen schweren Bilderrahmen, wird hierdurch ermöglicht.

Im Gegensatz zu etwaigen anderen Lösungsansätzen oder Produkten zeichnet sich das erfindungsgemäße Befestigungselement durch seine Einfachheit sowie die kostengünstige Produktion in hohen Stückzahlen im Kunststoff-Spritzguss-Verfahren, und entsprechend niedrigen Kosten auf Seiten des Endverbrauchers aus.

Zudem erlaubt die einfache und rasche, mit wenigen Handgriffen durchgeführte Justierung in der Höhe/Vertikale eine Toleranz bezüglich der Genauigkeit bei der Hängung, die sich allzu oft ohne Selbstverschulden aus der baulichen Beschaffenheit der Wände und Flächen ergibt.

Im Falle von Altbauwänden beispielsweise erhalten die Bausubstanz und der Verputz in der Regel einen großen Anteil an Schutt und kleineren Steinen, die ein exaktes Bohrloch so gut wie unmöglich machen. Positionsabweichungen in den Bohrlöchern sind somit kaum zu vermeiden. Auf diese Weise ist eine perfekte gerade Hängung von Bildwerken ein aufwendiges Unterfangen, das sich zumeist nur durch weitere unnötige Bohrungen und somit Beschädigung des Mauerwerks lösen lässt.

Durch die Möglichkeit der vertikalen Nachjustierung des erfindungsgemäßen Befestigungselements ist es in solchen Fällen möglich - im Rahmen der je nach Variante unterschiedlichen Toleranz bzw. Höhenverstellbarkeit - Bildwerke nachträglich waagerecht auszurichten.

Ebenso ist bei der exakten Hängung mehrerer Bildwerke neben- und übereinander (Serienhängung) allerhöchste Genauigkeit vonnöten, da auch nur minimale Abweichungen sichtbar sind und sich im weiteren Verlauf potenzieren. Hinzu kommt, dass durch architektonische Schrägen - beispielweise beim Deckenabschluss in historischen Gebäuden - selbst exakt waagrecht gehängte Serien "optisch schief" wirken. Auch hier sind die Vorteile des erfindungsgemäßen Befestigungselements durch die einfache Nachjustierung evident.

Weiters zeichnen sich die Vorteile des erfindungsgemäßen Befestigungselements bei der Hängung von Bildwerken aus, die so geschaffen und konzipiert wurden, dass kleinere Formate zu einem größeren Endformat zusammengesetzt werden. Insbesondere eine Ausrichtung in vertikaler Richtung ist hierbei von großer Bedeutung. Zum einen müssen alle Formate, die jeweils über anderen Werkteilen platziert werden, an die darunter befindlichen Formaten direkt anschließen, zum anderen aber selbst stabil hängen, um ihr Gewicht nicht nach unten abzustützen oder nach vorne von der Wand zu kippen.

Insbesondere geeignet ist das erfindungsgemäße Befestigungselement zur Aufhängung von auf Keilrahmen gespannten Leinwänden und gerahmten Werken, bei denen der Rahmen direkt zur Hängung vorgesehen ist oder verwendet werden kann, oder Bildwerken mit rückseitig montierter Hängeleiste.

Im Sinne der vorliegenden Erfindung wird unter Wand jedes flächige Bauteil verstanden, welches eine raumbildende, raumabgrenzende oder raumteilende Funktion hat (Wandung oder Mauer). Die Umgrenzungsfläche bzw. Hüllfläche der Wand kann dabei jede beliebige Form annehmen und muss nicht zwingend die Form einer geraden Ebene annehmen. Die Wand erstreckt sich in entlang einer horizontalen und einer im Wesentlichen vertikalen Richtung, wobei die vertikale Richtung auch schräg bzw. geneigt sein kann und nicht zwingend lotrecht sein muss. Als vertikale Richtung wird dabei stets jene Richtung definiert, welche parallel zur Wand und normal zur horizontalen, waagrechen Richtung liegt.

Im Sinne der vorliegenden Erfindung wird unter einem Befestigungsmittel jedes zur Befestigung von Elementen an einer Wand geeignete Mittel verstanden. Ein solches Befestigungsmittel kann etwa eine Schraube, ein Bolzen, ein Nagel oder dergleichen sein.

Es wird festgehalten, dass zur leichteren Darstellung der Erfindung von einem Befestigungselement zur Aufhängung von Bildern oder Bilderrahmen gesprochen wird, das erfindungsgemäße Befestigungselement sich aber ebenso zur Aufhängung von Möbelstücken, Spiegeln, Dekorationsobjekten, Geräten oder dergleichen eignet. Auch bei der Aufhängung von Objekten an Fliesenwänden, bei denen die Bohrlöcher in Fugen gesetzt werden müssen, kann sich das erfindungsgemäße Befestigungselement auszeichnen. Wenn in weiterer Folge auf die Aufhängung von Bildern oder Bilderrahmen verwiesen wird, so sind andere vergleichbare aufzuhängende Objekte ebenso mitgemeint.

In weiterer Folge sind bevorzugte Ausgestaltungen des Befestigungselements anhand von Ausführungsvarianten dargestellt. Es wird festgehalten, dass die im Nachfolgenden beschriebenen Ausführungsvarianten beliebig miteinander kombiniert werden können.

Gemäß einer Ausführungsvariante der Erfindung kann die vordere Mantelfläche des Auflagebereichs im Wesentlichen zylinderförmig ausgebildet sein. Unter zylinderförmig wird dabei die allgemeine Zylinderform verstanden, also eine Mantelfläche, die durch parallele Geraden gebildet wird, welche die korrespondierenden Punkte zweier identischer gegeneinander verschobener Kurven bzw. Konturen miteinander verbinden. Der Auflagebereich ist dabei bevorzugt parallel zu der Bohrungsachse ausgerichtet, womit stets eine gerade Auflagefläche für einen Bilderrahmen bereitgestellt werden kann.

Gemäß einer weiteren Ausführungsvariante der Erfindung kann die hintere Außenkontur einen geringeren Durchmesser als die mittlere und die vordere Außenkontur aufweisen. Dies ist insbesondere im Falle von runden, elliptischen oder abgerundeten Außenkonturen vorteilhaft, da durch den reduzierten Durchmesser der hinteren Außenkontur konstruktiv einfach die verjüngende Form des Haltebereichs erreicht werden kann.

Alternativ kann gemäß einer Ausführungsvariante die hintere Außenkontur so beschaffen sein, dass diese (auf eine Ebene projiziert) vollständig innerhalb der vorderen und mittleren Außenkontur liegt bzw. von diesen eingeschlossen wird und diese sich an keinem Punkt schneiden. Hiermit kann der sich zur Rückseite hin verjüngende Haltebereich auch bei beliebig geformten Außenkonturen erreicht werden.

Gemäß einer Ausführungsvariante können/kann die vordere und/oder mittlere und/oder hintere Außenkontur entlang einer Längsrichtung elongiert sein. Durch die elongierte Außenkontur kann wiederum auf konstruktiv einfache Weise die Höhenverstellbarkeit des Befestigungselements sichergestellt werden, da die elongierten Außenkonturen bei Rotation des Befestigungselements um die Bohrungsachse zu einem Hub bzw. Senken des Auflagebereichs führen.

Gemäß einer Ausführungsvariante kann die Länge des Befestigungselements (in Längsrichtung) zumindest der 2-fachen Breite des Befestigungselements (quer zur Längsrichtung) entsprechen. Bevorzugt kann die Länge des Befestigungselements zumindest der 3-fachen Breite, besonders bevorzugt zumindest der 4-fachen Breite, des Befestigungselements entsprechen. Durch die vielfache Länge gegenüber der Breite kann eine besonders vorteilhafte Hebelwirkung beim Drehen des Befestigungselements um die Bohrungsachse erreicht werden, so dass sich das Befestigungselement auch per Hand in seiner Rotation verstellen lässt. Eine werkzeugfreie Verstellung der Höhe des Befestigungselements kann so erreicht werden. Zudem ermöglicht der Unterschied zwischen Länge und Breite einen vorteilhaften Hub zur Anpassung der Höhe des Befestigungselements, wodurch das Befestigungselement flexibel einsetzbar ist.

Gemäß einer Ausführungsvariante können/kann die vordere und/oder mittlere Außenkontur im Wesentlichen elliptisch sein. Die elliptische Form mit einer großen und einer kleinen Halbachse stellt dabei eine einfache und zuverlässige Möglichkeit dar, wie eine entlang einer Längsrichtung elongierte Außenkontur zur Erzeugung eines rotationsabhängigen Hubs des Befestigungselements geschaffen werden kann.

Gemäß einer Ausführungsvariante können/kann die vordere und/oder mittlere Außenkontur durch eine glatte Kurve gebildet sein. Die glatte Außenkontur ist dabei insbesondere frei von Stufen oder Kanten und kann so eine einfache Verstellung des Befestigungselements selbst bei Belastung ermöglichen. Zudem wird durch die glatte Kurve der Außenkontur eine stufenlose Verstellung der Höhe des Auflagebereichs ermöglicht, womit das Befestigungselement besonders genau justiert werden kann.

Gemäß einer Ausführungsvariante können die vordere und mittlere Außenkontur im Wesentlichen deckungsgleich, bzw. kongruent, sein. Durch deckungsgleiche Außenkonturen im Bereich der Vorderseite wird ein gerader, zur Bohrungsachse paralleler, Auflagebereich geschaffen, welcher eine zuverlässige Auflagerung eines Bilderrahmens ermöglicht. Durch Variieren des Abstands zwischen vorderer und mittlerer Außenkontur kann die Breite des Auflagebereichs angepasst werden und so für unterschiedliche Typen an Bilderrahmen angepasst werden.

Gemäß einer Ausführungsvariante der Erfindung kann die hintere Außenkontur im Wesentlichen elliptisch sein. Hierbei kann durch die hintere Mantelfläche im Haltebereich ein einfaches und zuverlässiges Greifen des Befestigungselements sichergestellt werden. Ist zudem die mittlere Außenkontur im Wesentlichen elliptisch, so können die elliptischen Außenkonturen kontinuierlich als verjüngende Ellipse ineinander übergehen, was eine besonders ergonomische Handhabung ermöglicht.

Gemäß einer weiteren Ausführungsvariante der Erfindung können Eckpunkte der hinteren Außenkontur auf einer im Wesentlichen elliptischen Kurve liegen. Dies kann sich insbesondere dann als vorteilhaft erweisen, wenn die hintere Außenkontur durch keine glatte Kurve gebildet ist, sondern aus miteinander an Eckpunkten verbundenen Teilkurven besteht. Vorzugsweise wird die elliptische Kurve dabei durch die Teilkurven nicht geschnitten, so dass die elliptische Kurve die hintere Außenkontur einhüllt. Eine derart geformte hintere Außenkontur kann an den Eckpunkten Rastnasen ausbilden, welche in der Lage sind, sich ins Mauerwerk einzugraben und einer Rotation des Befestigungselements entgegenzuwirken. Eine sichere Befestigung mit reduzierter Gefahr unabsichtlichem Verstellens kann somit gewährleistet werden.

Gemäß einer Ausführungsvariante der Erfindung wird die hintere Mantelfläche im Haltebereich durch eine kontinuierliche Verbindung mittels Geraden zwischen der mittleren Außenkontur und der hinteren Außenkontur gebildet. Durch die als kontinuierliche Verbindung ausgebildete hintere Mantelfläche kann das Befestigungselement ergonomisch und sicher im Haltebereich mit den Fingern gegriffen werden und insbesondere ohne Werkzeug verstellt werden.

Gemäß einer weiteren Ausführungsvariante kann die hintere Mantelfläche in einem Griffbereich eine Griffmulde aufweisen. Durch die Einbuchtung oder Ausnehmung der Griffmulde in der hinteren Mantelfläche kann die ergonomische Handhabung des Befestigungselements weiter verbessert werden. Insbesondere kann hierdurch ein dedizierter Griffbereich geschaffen werden, welcher ein zuverlässiges Greifen und Manipulieren (bspw. Verdrehen) des Befestigungselements mit den Fingern erlaubt.

Zudem kann sich gemäß einer Ausführungsvariante die Griffmulde auch auf die vordere Mantelfläche zwischen vorderer und mittlerer Außenkontur erstrecken. Die Griffmulde kann dabei etwa derart in der vorderen Mantelfläche vorgesehen sein, dass diese nicht bis zur Vorderseite des Befestigungselements reicht, sondern ein Steg der vorderen Mantelfläche umlaufend bestehen bleibt. Durch den umlaufenden Steg kann selbst beim Vorsehen einer Griffmulde ein vollständig umlaufender Auflagebereich zur Montage eines Bildes oder Bilderrahmens garantiert werden.

Gemäß einer Ausführungsvariante kann der Griffbereich mit der Griffmulde an einer Querseite des Befestigungselements angeordnet sein. Hat das Befestigungselement etwa eine elliptische vordere Außenkontur, so kann der Griffbereich im Bereich des Scheitelpunkts der kleinen Halbachse der elliptischen vorderen Außenkontur angeordnet sein. Die Anordnung der Griffmulde an der Querseite des Befestigungselements ermöglicht aufgrund der im Vergleich zur Länge geringeren Breite ein einfaches Erfassen und Greifen bzw. Drehen des Befestigungselements. Zudem kann durch Anordnung der Griffmulde an der Querseite der Hebeleffekt durch die Längsseite des Befestigungselements ausgenutzt werden - beispielsweise um das bereits montierte (und leicht angezogene) Befestigungselement um die Bohrungsachse zu verdrehen und somit die Höhe des Bildes zu justieren.

Das erfindungsgemäße Befestigungselement kann durch die ergonomisch geformte Taillierung durch die Griffmulden gut und sicher mit einer Hand in die gewünschte Position gebracht und in dieser Position gehalten werden, um schließlich mittels Befestigungsmittel fixiert zu werden. Im Gegensatz dazu, sind etwaige kreisrunde Lösungen - insbesondere jene mit exzentrischer Bohrung - deutlich schwieriger handzuhaben.

Gemäß einer Ausführungsvariante kann das Befestigungselement an seiner Rückseite zumindest ein Mittel aufweisen, welches zur Erhöhung der Reibung zwischen Befestigungselement und Wand geeignet ist. Das Mittel zur Erhöhung der Reibung kann dabei helfen, ein ungewünschtes Verdrehen - und damit Verstellen - des montierten Befestigungselements zu verhindern, beispielsweise durch eine zu hohe Belastung oder dergleichen.

Gemäß einer Ausführungsvariante kann das zumindest eine Mittel zur Erhöhung der Reibung eine Rippe sein. Eine solche Rippe kann etwa gegenüber der Rückseite des Befestigungselements vorspringen und sich beim Anziehen des Befestigungsmittels in das Mauerwerk bzw. den Wandbelag eindrücken, wodurch ein Verdrehen des Befestigungselements weiter erschwert wird.

Besonders hohe Reibungskräfte können erzielt werden, wenn die sich Rippe dabei radial von der Bohrung zur hinteren Außenkontur erstreckt.

Alternativ kann das Mittel zur Erhöhung der Reibung auch eine Oberflächenkorrugation der Rückseite (bspw. im Sinne einer Körnung) oder ein gezacktes Profil sein.

Gemäß einer Ausführungsvariante kann das Befestigungselement im Auflagebereich zumindest ein Mittel aufweisen, welches zur Sicherung des Bildes bzw. Bilderrahmens gegen Verrutschen auf dem Befestigungselement geeignet ist. Das Mittel gegen Verrutschen kann dabei die Reibung zwischen Bild bzw. Bilderrahmen und Auflagebereich des Befestigungselements erhöhen. Ein solches Mittel kann etwa durch Vorsprünge, Spitzen, Aufrauhungen, adhäsiven Stoffen oder dergleichen gebildet sein.

Gemäß einer Ausführungsvariante kann das zumindest eine Mittel zur Sicherung gegen Verrutschen gegenüber der vorderen Mantelfläche im Auflagebereich radial vorstehen. Ein radial vorstehendes Mittel kann etwa in einen den Auflagebereich kontaktierenden Bilderrahmen eingreifen - beispielsweise sich in diesen eindrücken - und so die Reibung zwischen Bilderrahmen und Befestigungsmittel erhöhen. Ein solches radial vorstehendes Mittel eignet sich vorteilhaft bei der Montage von Bildern bzw. Bilderrahmen aus vergleichsweise weichen Materialien, wie etwa Holz oder Kunststoffen, da das Mittel zumindest teilweise in das Material eindringen kann.

Gemäß einer Ausführungsvariante kann das zumindest eine Mittel zur Sicherung gegen Verrutschen im Bereich eines längsseitigen Endes des Befestigungselements angeordnet sein. Da am längsseitigen Ende des Befestigungselements der größte Hub bei Rotation um die Bohrungsachse erreicht wird, können die Mittel zur Sicherung am längsseitigen Ende die größte Wirkung entfalten.

Gemäß einer Ausführungsvariante kann das zumindest eine Mittel zur Sicherung gegen Verrutschen ein Zahn, Zacken, Sägezahn, eine Schneidkante oder dergleichen sein. Ein konstruktiv einfaches und zuverlässiges Mittel zur Sicherung kann hiermit geschaffen werden.

Gemäß einer Ausführungsvariante kann das Mittel zur Sicherung gegen Verrutschen lediglich an einem längsseitigen Ende des Befestigungselements vorgesehen sein. Das andere längsseitige Ende kann dabei frei von dem Mittel zur Sicherung bleiben und so ein vielseitiges Befestigungselement geschaffen werden.

Prinzipiell ist festzuhalten, dass flache Bildwerke, die bündig mit der Wand abschließen, aufgrund der Schwerkraft stabil hängen und nicht nach vorne abrutschen können oder unerwünschte Hebelkräfte nach vorne erzeugen. Zudem sind sie in der Regel auch von jeglichen mechanischen Zugriffen ausgenommen. Dennoch kann es aufgrund der baulichen Beschaffenheit der Montageflächen wie Unebenheiten der Mauerstruktur - beispielsweise bei älteren Bauwerken - zusätzlich erwünscht sein, eine zusätzliche Absicherung vorzusehen.

Durch die halbseitige Ausführung des Auflagebereichs mit Zacken am äußeren längsseitigen Ende, welche durch leichten Druck in das Holz des Keilrahmens oder Bilderrahmens eindringen können, werden die entsprechenden Bilderwerke ohne weitere Komplikationen gegen ein etwaiges Abrutschen abgesichert.

### Kurzbeschreibung der Figuren

Im Folgenden werden bevorzugte Ausführungsvarianten der Erfindung anhand der Zeichnungen näher dargestellt. Es zeigen:
- Fig. 1: eine erste axonometrische Ansicht eines Befestigungselements gemäß einer ersten Ausführungsvariante der Erfindung,
- Fig. 2: eine zweite axonometrische Ansicht des Befestigungselements gemäß Fig. 1,
- Fig. 3: eine Aufsicht von unten auf das Befestigungselement gemäß Fig. 1,
- Fig. 4: eine aufgerissene Schnittansicht des Befestigungselements gemäß der ersten Ausführungsvariante an einer Wand,
- Fig. 5: eine Draufsicht auf das Befestigungselement gemäß Fig. 4,
- Fig. 6: eine schematische Darstellung unterschiedlicher Rotationsstellungen des Befestigungselements,
- Fig. 7: eine Seitenansicht auf die Querseite eines Befestigungselements gemäß einer zweiten Ausführungsvariante der Erfindung,
- Fig. 8: eine Draufsicht auf das Befestigungselement gemäß Fig. 7,
- Fig. 9: eine aufgerissene Schnittansicht durch die Querseite des Befestigungselements gemäß Fig. 7,
- Fig. 10: eine Seitenansicht auf die Querseite eines Befestigungselements gemäß einer dritten Ausführungsvariante der Erfindung,
- Fig. 11: eine Draufsicht auf das Befestigungselement gemäß Fig. 10,
- Fig. 12: eine aufgerissene Schnittansicht durch die Querseite des Befestigungselements gemäß Fig. 10,
- Fig. 13: eine Seitenansicht auf die Querseite eines Befestigungselements gemäß einer vierten Ausführungsvariante der Erfindung,
- Fig. 14: eine Draufsicht auf das Befestigungselement gemäß Fig. 13,
- Fig. 15: eine aufgerissene Schnittansicht durch die Querseite des Befestigungselements gemäß Fig. 13,
- Fig. 16: eine schematische Darstellung der Verwendung der erfindungsgemäßen Befestigungselemente zur Anordnung von Bildern gemäß einer ersten Ausführungsvariante,
- Fig. 17: eine schematische Darstellung der Verwendung der erfindungsgemäßen Befestigungselemente zur Anordnung von Bildern gemäß einer zweiten Ausführungsvariante, und
- Fig. 18: eine schematische Darstellung der Verwendung der erfindungsgemäßen Befestigungselemente zur Anordnung von Bildern gemäß einer dritten Ausführungsvariante.

### Wege zur Ausführung der Erfindung

Die Erfindung wird im Folgenden anhand der in den Figuren gezeigten Ausführungsvarianten exemplarisch beschrieben. Es wird festgehalten, dass die Merkmale der im Folgenden beschriebenen Ausführungsvarianten beliebig miteinander kombiniert werden können, sofern nichts anderes angegeben ist.

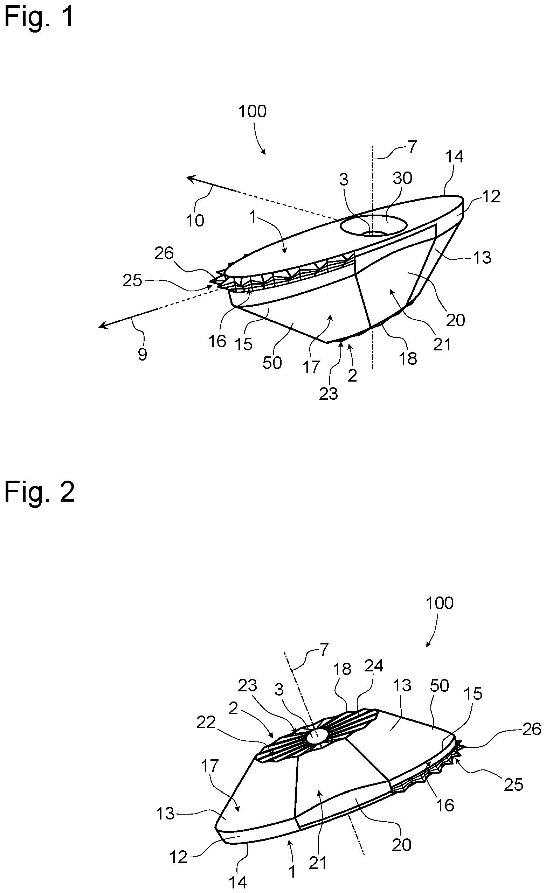

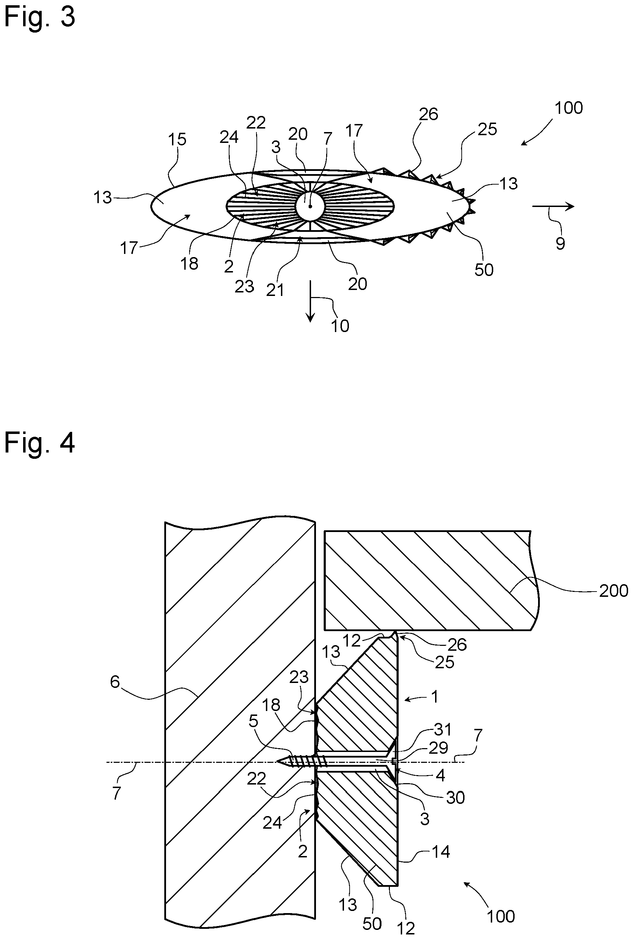

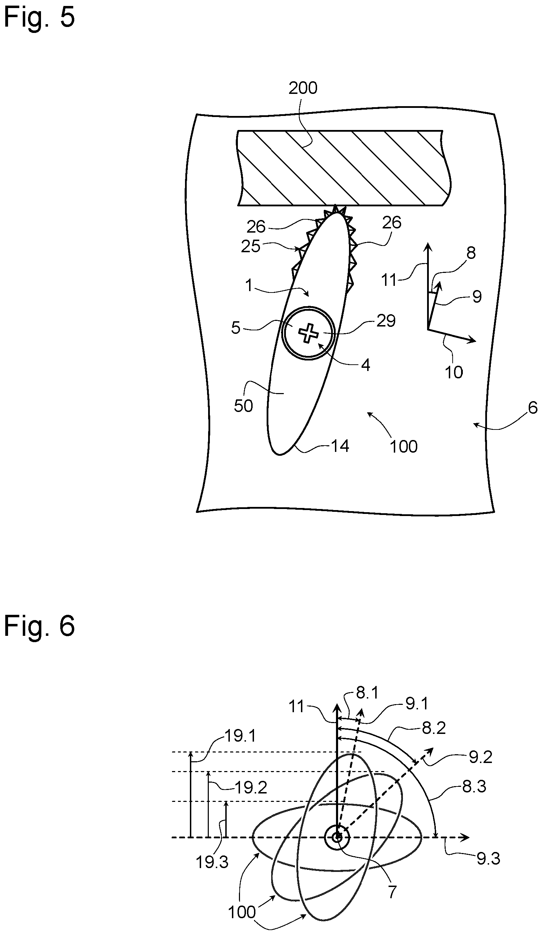

In den Figuren 1 bis 5 sind unterschiedliche Ansichten des erfindungsgemäßen Befestigungselements 100 gemäß einer ersten Ausführungsvariante dargestellt. Fig. 1 zeigt hierbei eine axonometrische Ansicht von oben und seitlich auf das Befestigungselement 100, Fig. 2 eine axonometrische Ansicht von unten und seitlich, Fig. 3 eine Ansicht von unten, Fig. 4 eine aufgerissene Schnittansicht des Befestigungselements 100 bei Montage an einer Wand 6, und Fig. 5 eine Draufsicht auf das Befestigungselement 100 bei Montage an einer Wand 6.

Das Befestigungselement 100 weist dabei einen Körper 50 mit einer Vorderseite 1 und einer Rückseite 2 auf, zwischen denen sich der Körper 50 erstreckt. Zudem ist in dem Körper 50 des Befestigungselements 100 eine Bohrung 3 eingebracht, welche das Befestigungselement 100 von der Vorderseite 1 ausgehend zur Rückseite 2 hin durchdringt und zur Aufnahme eines Befestigungsmittels 4, insbesondere einer Schraube 5, ausgebildet ist.

Wie in den Fig. 4 und 5 gezeigt, kann das Befestigungselement 100 mit der Rückseite 2 an einer Wand 6 befestigt werden, wobei zur Befestigung des Befestigungselements 100, die Schraube 5 durch die Bohrung 3 in die Wand 6 eingeschraubt ist. Die Schraube 5 kann dabei unter Verwendung üblicher Montagemittel, wie etwa Dübel oder dergleichen, in der Wand 6 verankert sein. Die Schraube 5 ist bevorzugt als Senkkopfschraube 29 ausgebildet, wobei der Senkkopf 31 in einer entsprechenden Senkung 30 an der Vorderseite 1 am Bohrloch 3 vollständig aufgenommen wird.

Wie in Fig. 5 schematisch dargestellt, kann das Befestigungselement 100 nach Montage an einer Wand 6 durch Rotation um die Bohrungsachse 7 in seinem Rotationswinkel 8 eingestellt werden. Der Rotationswinkel 8 wird dabei als Verdrehung der Längsrichtung 9 des Befestigungselements 100 gegenüber der vertikalen Richtung 11 der Wand 6 verstanden.

Das Befestigungselement 100 kann somit zur stufenlosen vertikalen Justierung eines Bildes bzw. Bilderrahmens 200 eingesetzt werden. Durch Lockern und Wiedernachziehen der Schraube 5 kann die Stellung bzw. der Rotationswinkel 8, zum Beispiel "von 3 Uhr nach 12 Uhr", stufenlos angepasst, in der gewünschten Position an der Wand fixiert und die Bilder 200 bzw. Bildwerke waagegerecht ausgerichtet werden.

Das Befestigungselement 100 weist eine vordere Mantelfläche 12 und eine hintere Mantelfläche 13 auf, wobei vordere und hintere Mantelfläche 12, 13 direkt aneinander anschließen und den Körper 50 seitlich begrenzen.

Die vordere Mantelfläche 12 erstreckt sich zwischen der vorderen Außenkontur 14 und der mittleren Außenkontur 15, welche gemäß der in den Fig. 1 bis 5 dargestellten Ausführungsvarianten elliptisch ausgebildet sind. Vordere und mittlere Außenkontur 14, 15 sind zudem deckungsgleich, so dass die vordere Mantelfläche 12 als elliptische Zylindermantelfläche ausgebildet ist. Die vordere Außenkontur 14 entspricht dabei der umlaufenden Kante des Befestigungselements 100 an der Vorderseite 1.

Durch die vordere Mantelfläche 12 ist zudem ein Auflagebereich 16 am Befestigungselement 100 ausgebildet. Der Auflagebereich 16 dient dabei der Auflage eines Bildes bzw. Bilderrahmens 200. Der Bilderrahmen 200 liegt dabei durch die Schwerkraft am Befestigungselement 100 im Auflagebereich 16 der vorderen Mantelfläche 12 auf und wird so getragen.

Die hintere Mantelfläche 13 erstreckt sich zwischen der mittleren Außenkontur 15 und der hinteren Außenkontur 18, wobei hintere Außenkontur 18, ebenso wie die vordere und die mittlere Außenkontur 14, 15, gemäß der ersten Ausführungsvariante elliptisch ist. Die hintere Außenkontur 18 hat dabei geringere Halbachsendurchmesser als die vordere und mittlere Außenkontur 14, 15, wobei die großen und kleinen Halbachsen aller Außenkonturen 14, 15, 18 jeweils parallel zueinander liegen. Zudem liegen die Mittelpunkte der vorderen, mittleren und hinteren Außenkontur 14, 15, 18 jeweils auf der Bohrungsachse 7. Die größere mittlere Außenkontur 15 ist dabei zumindest bereichsweise über Geraden mit der kleineren hinteren Außenkontur 18 verbunden um eine kontinuierliche und stufenlose hintere Mantelfläche 13 zu erhalten.

Von der Vorderseite ausgehend 1 verjüngt sich die hintere Mantelfläche 13 in Form eines Ellipsenkegelstumpfes zur Rückseite 2 hin. Bei Montage des Befestigungselements 100 an einer Wand 6, entsteht zwischen diesen ein keilförmiger Raum, welcher Platz für die Finger einer Hand lässt.

Die hintere Mantelfläche 13 bildet dabei einen Haltebereich 17 aus, welcher zum Greifen des Befestigungselements 100 mit einer Hand geeignet ist. Durch ein beidseitiges Greifen des Befestigungselements 100 im Haltebereich 17 - beispielsweise mit Daumen und Zeigefinger - lässt sich das Befestigungselement 100 durch die verjüngte Form somit bequem fassen und kann unter Druckausübung um die Bohrungsachse 7 verdreht werden.

Durch die entlang der Längsrichtungen 9.1, 9.2, 9.3 elongierten elliptischen Formen der vorderen und mittleren Außenkontur 14, 15, kann der Abstand zwischen Auflagebereich 16 und Bohrungsachse 7 durch Rotation des Befestigungselements 100 um die Bohrungsachse 7 verändert werden, wie dies schematisch in Fig. 6 dargestellt ist. Verschiedene Rotationswinkel 8.1, 8.2, 8.3 der Längsrichtungen 9.1, 9.2, 9.3 um die vertikale Richtung 11 führen somit zu unterschiedlichen Höhen 19.1, 19.2, 19.3 für die Aufhängung eines Bildes bzw. eines Bilderrahmens 200.

Insbesondere der große Unterschied zwischen Länge des Befestigungselements 100 in Längsrichtung 9 und Breite in Querrichtung 10, welcher in der dargestellten Ausführungsvariante einen Faktor von vier beträgt, ermöglicht einen großen Einstellbereich hinsichtlich der Höhen 19.1, 19.2, 19.3 bei gleichzeitig geringer Breite des Befestigungselements 100, wodurch eine ergonomische Greifposition sichergestellt werden kann.

Wie aus den Fig. 1 bis 3 ersichtlich, weist die hintere Mantelfläche 13 Griffmulden 20 in einem Griffbereich 21 auf. Die Griffmulden 20 sind dabei an beiden gegenüberliegenden Querseiten (also von der Bohrungsachse 7 aus in Querrichtung 10 gesehen) des Befestigungselements 100 angeordnet, so dass ein Umgreifen und Halten des Befestigungselements 100 in beiden Griffmulden 20 erleichtert ist. Die Anordnung der Griffmulden 20 ist dabei bevorzugt an den Scheitelpunkten im Bereich der kleinen Halbachsen der mittleren Außenkontur 15.

Zudem weist das Befestigungselement 100 an seiner Rückseite 2 ein Mittel 22 zur Erhöhung der Reibung mit der Wand 6 auf. Dieses Mittel 22 ist - wie in den Fig. 2 bis 4 schematisch dargestellt - als Korrugation bzw. als Vorsprünge 23 an der Rückseite 2 ausgebildet. Die Vorsprünge 23 nehmen dabei die Form von Rippen 24 an, welche sich radial strahlenförmig von der Bohrung 3 ausgehend zur hinteren Außenkontur 18 erstrecken. Durch die Vorsprünge 23 bzw. Rippen 24 wird eine zick zack- oder sägezahnartige Korrugation parallel zur elliptischen Kontur 18 erzeugt. Die Rippen 24 können sich beim Anschrauben der Schraube 5 in das Wandmaterial der Wand 6 eindrücken und somit einem Rotieren bzw. Verdrehen des Befestigungselements 100 um die Rotationsachse 7 entgegenwirken bzw. dieses verhindern.

Die Montage des Befestigungselement 100 kann somit mehrstufig verlaufen: das Befestigungselement 100 kann zunächst mit dem Befestigungsmittel 4 an einer Wand 6 befestig werden und leicht angezogen werden, so dass die Rippen 24 noch nicht in das Wandmaterial eingedrückt werden. Danach kann das Befestigungselement 100 mit der Hand in die gewünschte Rotationsstellung gedreht werden um die Höhe auszurichten. Schließlich kann das Befestigungsmittel 4 fest angezogen werden, um das Befestigungselement an der Wand 6 zu fixieren, in dem die Rippen 24 in das Wandmaterial eingedrückt werden.

Um den Bilderrahmen 200 schließlich sicher auf dem Befestigungselement 100 zu halten, kann das Befestigungselement 100 - wie in den Fig. 1 bis 5 gezeigt zusätzlich Mittel 25 zur Sicherung gegen Verrutschen aufweisen. Diese Mittel 25 sind gegenüber der vorderen Mantelfläche 12 als radial vorstehende Zähne 26 bzw. Zacken ausgebildet, welche sich in einen Bilderrahmen 200 eindrücken können, insbesondere wenn dieser aus weichen Materialien gefertigt ist. Die Zähne 26 sind dabei im Auflagebereich 16 an einem längsseitigen Ende - also von der Bohrung 3 in Längsrichtung 9 - des Befestigungselements 100 angebracht. Auf dem gegenüberliegenden längsseitigen Ende des Befestigungselements 100 sind keine Mittel 25 vorgesehen. Somit kann das Befestigungselement 100 universell verwendet werden und je nach Material und Beschaffenheit des Bilderrahmens 200 ein entsprechendes längsseitiges Ende des Befestigungselements 100 ausgewählt werden.

Alternativ kann das Befestigungselement 100 als Mittel 25 zur Sicherung gegen Verrutschen auch hafterhöhende Beschichtungen oder Gummierungen aufweisen. Solche Mittel 25 können beispielsweise bei harten und/oder glatten Materialien, wie etwa Metall von Vorteil sein. Dies wurde in den Figuren jedoch nicht näher dargestellt.

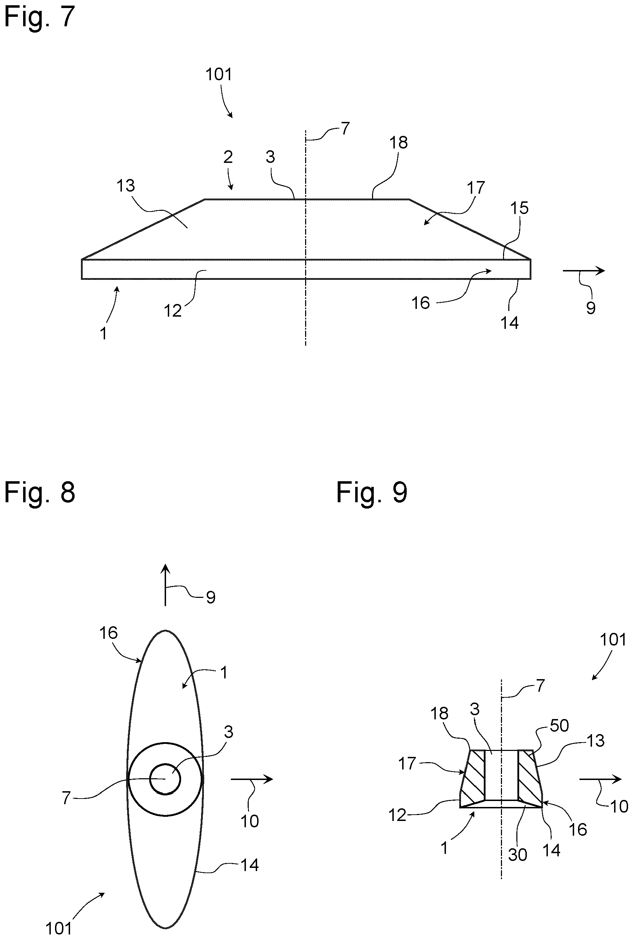

In den Fig. 7 bis 15 sind Befestigungselemente 101, 102, 103 gemäß einer zweiten, dritten und vierten Ausführungsvariante der Erfindung dargestellt. Die obenstehenden Ausführungen in Bezug auf das Befestigungselement 100 anhand der Figuren 1 bis 6 sind, soweit im Folgenden nichts anderes angegeben ist, ebenso für die Befestigungselemente 101, 102, 103 der zweiten, dritten und vierten Ausführungsvariante anwendbar.

Fig. 7 zeigt dabei eine Seitenansicht auf die Querseite, Fig. 8 eine Draufsicht und Fig. 9 eine Schnittansicht durch die Querseite des Befestigungselements 101 gemäß der zweiten Ausführungsvariante.

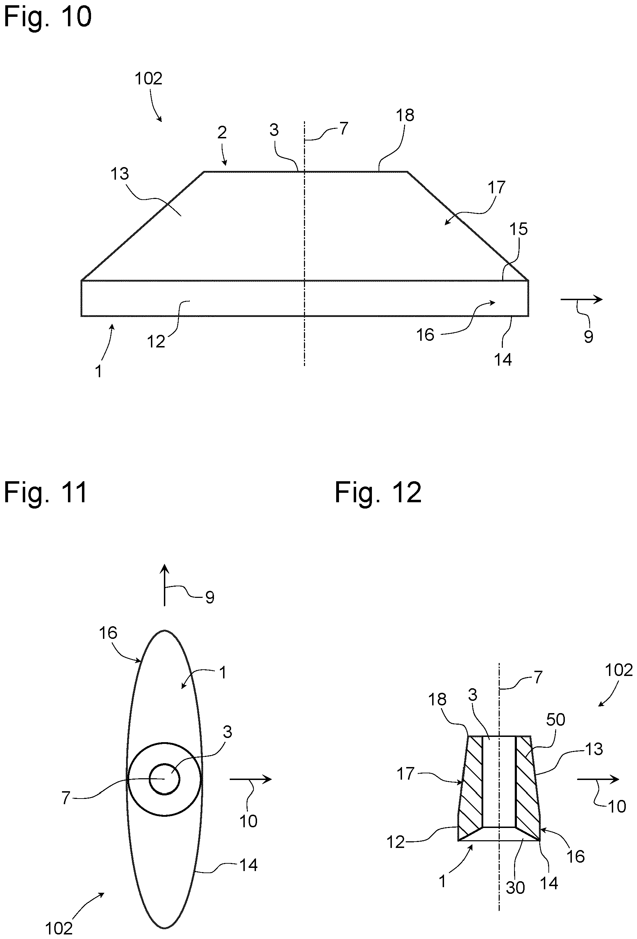

Fig. 10 zeigt dabei eine Seitenansicht auf die Querseite, Fig. 11 eine Draufsicht und Fig. 12 eine Schnittansicht durch die Querseite des Befestigungselements 102 gemäß der dritten Ausführungsvariante.

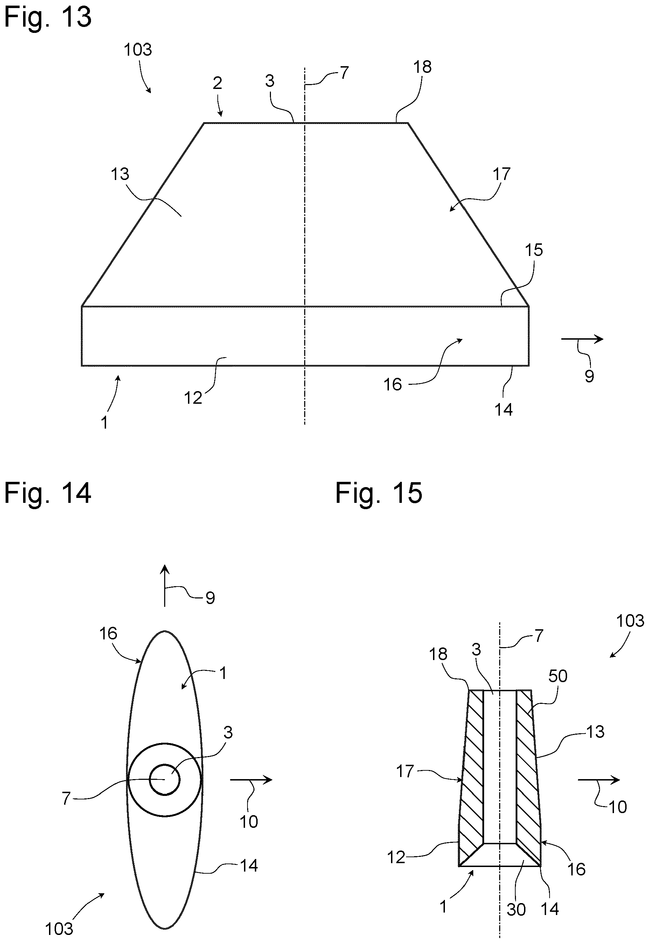

Fig. 13 zeigt dabei eine Seitenansicht auf die Querseite, Fig. 14 eine Draufsicht und Fig. 15 eine Schnittansicht durch die Querseite des Befestigungselements 103 gemäß der vierten Ausführungsvariante.

Die vordere, mittlere und hintere Außenkontur 14, 15, 18 der Befestigungselemente 101, 102, 103 sind wiederum als elliptische Kurven ausgebildet, wobei vordere und mittlere Außenkontur 14, 15 identisch bzw. deckungsgleich sind und die hintere Außenkontur 18 als elliptische Kurve mit kürzeren Halbachsendurchmessern aufweist.

Hierdurch ist wiederum die vordere Mantelfläche 12 der Befestigungselemente 101, 102, 103 in Form eines elliptischen Zylinders ausgebildet, während die hintere Mantelfläche 13 in Form eines Ellipsenkegelstumpfes ausgebildet ist.

Im Gegensatz zu dem Befestigungselement 100 der ersten Ausführungsvariante, weisen die Befestigungselemente 101, 102, 103 gemäß der zweiten, dritten und vierten Ausführungsvariante keine Mittel 23 zur Erhöhung der Reibung zur Wand 6 auf. Zudem verzichten die Befestigungselemente 101, 102, 103 auf Griffmulden 20. Ebenso sind im Auflagebereich 16 keine Mittel 25 zur Sicherung gegen Verrutschen vorgesehen.

Es wird aber festgehalten, dass gemäß weiteren Ausführungsvarianten, welche in den Figuren nicht näher dargestellt sind, wahlweise Mittel 23 zur Erhöhung der Reibung zur Wand 6 und/oder Mittel 25 zur Sicherung gegen Verrutschen und/oder Griffmulden 20 vorgesehen sein können.

Durch die elliptischen Außenkonturen 14, 15, 18 sind die Befestigungselemente 101, 102, 103 in Längsrichtung 9 elongiert und weisen eine Länge auf, welche einem Vielfachen der Breite entspricht.

Das Befestigungselement 101 gemäß der zweiten Ausführungsvariante weist eine Länge auf, welche der 4-fachen Breite entspricht. Die Länge ist dabei mit 40mm gewählt, während die Breite 10mm beträgt. Durch diese Konfiguration kann ein Hub bzw. eine maximale Höhenverstellung durch Rotation von 15mm erreicht werden. Die Höhe des Befestigungselements 101, also der Abstand zwischen Vorderseite 1 und Rückseite 2, beträgt dabei 7mm. Das Befestigungselement 101 eignet sich dabei besonders zur Befestigung kleinerer Bilder bzw. leichterer Bilderrahmen.

Das Befestigungselement 102 gemäß der dritten Ausführungsvariante weist eine Länge auf, welche der 4,27-fachen Breite entspricht. Die Länge ist dabei mit 47mm gewählt, während die Breite 11mm beträgt. Der dabei erreichbare Hub bzw. die maximale Höhenverstellung durch Rotation beträgt 18mm. Die Höhe des Befestigungselements 102 beträgt dabei 15mm. Das Befestigungselement 102 eignet sich somit zur universellen Befestigung Bilder bzw. Bilderrahmen mit einer Vielzahl unterschiedlichen Formate und Größen.

Das Befestigungselement 103 gemäß der vierten Ausführungsvariante weist eine Länge auf, welche der 5,45-fachen Breite entspricht. Die Länge ist dabei mit 60mm gewählt, während die Breite 11mm beträgt. Der dabei erreichbare Hub bzw. die maximale Höhenverstellung durch Rotation beträgt 24,5mm. Die Höhe des Befestigungselements 103 beträgt dabei 34mm. Das Befestigungselement 103 eignet sich somit insbesondere zur Befestigung großer Bilder bzw. Bilderrahmen, beispielsweise von größeren Keilrahmen, welche eine große Tiefe aufweisen und einen großen Hub in der Höhenverstellung benötigen.

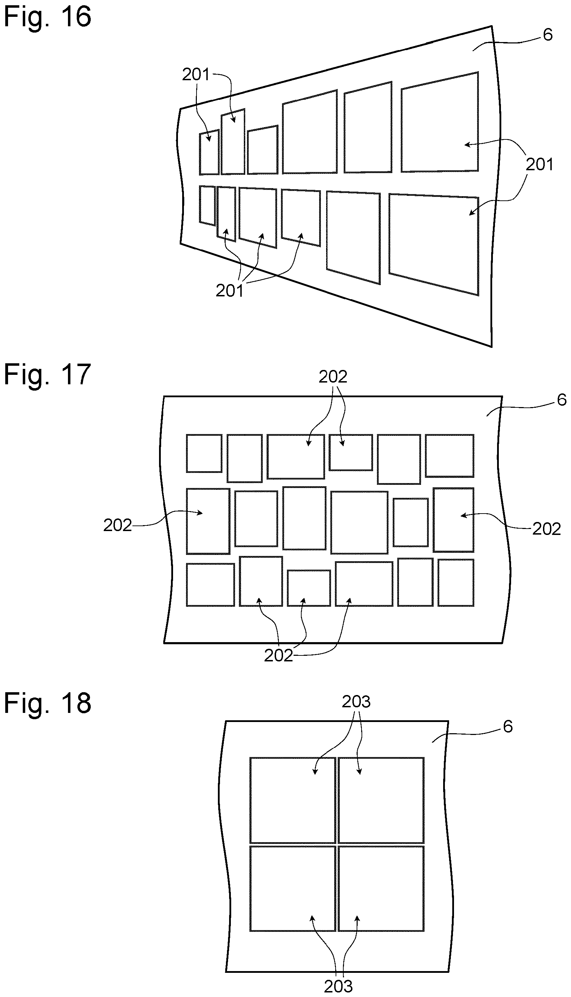

Die erfindungsgemäßen Befestigungselemente 100, 101, 102, 103 können wie in den Fig. 16 bis 18 gezeigt, zur Aufhängung von Bildern in unterschiedlichen Formationen eingesetzt werden, in denen die genau Ausrichtung der Bilder zueinander von Bedeutung ist.

Fig. 16 zeigt eine schematische Darstellung der Verwendung der erfindungsgemäßen Befestigungselemente 100, 101, 102, 103 zur Anordnung von Bildern 201 an einer Wand 6. Die Bilder 201 werden dabei in zwei Reihen entlang einer führenden Kante zueinander ausgerichtet, so dass sich jeweils gerade Fluchten an den Unterkanten der oberen Reihe und an den Oberkanten der unteren Reihe an Bildern 201 ergeben. Raumfluchten und schmale Gänge zeichnen sich durch starke perspektivische Verkürzungen aus, die hinsichtlich der (seriellen) Hängungen zu Problemen führen oder auch gestalterisch bewusst genutzt werden können.

Eine solche komplexe Anordnung an Bildern 201 ist normalerweise mit erheblichem Aufwand verbunden, da zunächst alle Bilder exakt vermessen werden müssen und danach entsprechend ihrer jeweiligen Maße zueinander positioniert und die Bohrlöcher gesetzt werden müssen. Geringe Abweichungen in den Bohrlöchern führen hierbei allerdings bereits dazu, dass keine geraden Fluchten mehr erreicht werden können.

Erfindungsgemäß stellt sich die Montage allerdings sehr einfach dar. Die Bilder 201 können einfach per Hand ungefähr an ihrer vorgesehenen Position markiert werden und die Bohrlöcher entsprechend gesetzt werden, bzw. die Befestigungselemente 100, 101, 102, 103 montiert werden. Höhenabweichungen zwischen den einzelnen Bildern 201 können durch Rotation der einzelnen Befestigungselemente 100, 101, 102, 103 einfach ausgeglichen werden.

In den Fig. 17 und 18 sind weitere schematische Darstellungen der Verwendung der erfindungsgemäßen Befestigungselemente 100, 101, 102, 103 zur Anordnung von Bildern 202, 203 an Wänden 6 gezeigt. Die obigen Ausführungen in Bezug auf Fig. 16 können sinngemäß auf die Fig. 17 und 18 angewandt werden.

In Fig. 17 ist eine sogenannte Salonhängung dargestellt. Bei der Salonhängung oder Petersburger Hängung werden bekanntermaßen Wände 6 bis zur Decke mit Bildern 202 unterschiedlicher Formate bestückt. Trotz akribischer Konzeption ist die schlussendliche Gesamterscheinung inklusive der Abstände zwischen den Bildern 202 im Voraus sehr schwer einzuschätzen. Das horizontale Nachjustieren nach links oder rechts ist dabei meist weniger problematisch, die Feinheiten in vertikaler Richtung hingegen schon, welche sich durch die erfindungsgemäßen Befestigungselemente 100, 101, 102, 103 leicht korrigieren lassen.

In Fig. 18 ist eine symmetrische Anordnung von (Einzel-)Bildern 203 zu einem (Gesamt-)Bildwerk gezeigt. Bei Bildwerken, die so geschaffen und konzipiert wurden, dass kleinere Formate zu einem größeren Endformat zusammengesetzt werden, bringt die vertikale Montage zusätzliche Herausforderungen mit sich. Zum einen müssen alle Formate, die jeweils über anderen Werkteilen platziert werden, an die darunter befindlichen Formaten direkt anschließen. Zum anderen aber selbst stabil hängen, um ihr Gewicht nicht nach unten abzustützen oder nach vorne von der Wand zu kippen. Auch hier können sich die erfindungsgemäßen Befestigungselemente mit ihrer vertikalen Justierbarkeit vorteilhaft auszeichnen.

## Patentansprüche

1. Befestigungselement, zur höhenverstellbaren Befestigung von Bildern (200) oder Bilderrahmen (200), wobei das Befestigungselement (100, 101, 102, 103) einen Körper (50) mit einer Vorderseite (1), einer Rückseite (2) und einer Bohrung (3) aufweist, wobei die Bohrung (3) das Befestigungselement (100, 101, 102, 103) entlang einer Bohrungsachse (7) von der Vorderseite (1) zur Rückseite (2) durchdringt und zur Befestigung des Befestigungselements (100, 101, 102, 103) an einer Wand (200) mittels eines Befestigungsmittels (4) in einem Rotationswinkel (8, 8.1, 8.2, 8.3) gegenüber einer vertikalen Richtung (11) ausgebildet ist, wobei der Körper (50) des Befestigungselements (100, 101, 102, 103)
eine vordere Mantelfläche (12) aufweist, welche einen Auflagebereich (16) des Befestigungselements (100, 101, 102, 103) zur Auflage des Bildes (200) oder Bilderrahmens (200) ausbildet und sich zwischen einer vorderen Außenkontur (14) an der Vorderseite (1) und einer mittleren Außenkontur (15) erstreckt, wobei vordere Außenkontur (14) und mittlere Außenkontur (15) an zumindest zwei Punkten einen unterschiedlichen Abstand zur Bohrungsachse (7) aufweisen,
**dadurch gekennzeichnet, dass** der Körper (50) des Befestigungselements (100, 101, 102, 103) zudem eine sich zur Rückseite (2) hin verjüngende hintere Mantelfläche (13) aufweist, welche einen Haltebereich (17) des Befestigungselements (100, 101, 102, 103) zum Greifen und Verdrehen des Befestigungselements (100, 101, 102, 103) um die Bohrungsachse (7) mit einer Hand ausbildet und sich zwischen einer hinteren Außenkontur (18) an der Rückseite (2) und der mittleren Außenkontur (15) erstreckt.

2. Befestigungselement gemäß Anspruch 1, **dadurch gekennzeichnet, dass** die vordere Mantelfläche (12) im Wesentlichen zylinderförmig ausgebildet ist.

3. Befestigungselement gemäß Anspruch 1 oder 2, **dadurch gekennzeichnet, dass** die hintere Außenkontur (18) einen geringeren Durchmesser, kleinere Halbachsen oder einen kleineren Umfang als die mittlere Außenkontur (15) und die vordere Außenkontur (14) aufweist.

4. Befestigungselement gemäß einem der Ansprüche 1 bis 3, **dadurch gekennzeichnet, dass** die vordere Außenkontur (14) und/oder die mittlere Außenkontur (15) und/oder die hintere Außenkontur (18) entlang einer Längsrichtung (9) elongiert sind/ist, wobei insbesondere die vordere Außenkontur (14) und/oder die mittlere Außenkontur (15) im Wesentlichen elliptisch sind/ist.

5. Befestigungselement gemäß einem der Ansprüche 1 bis 4, **dadurch gekennzeichnet, dass** die vordere Außenkontur (14) und/oder die mittlere Außenkontur (15) durch eine glatte Kurve gebildet sind/ist.

6. Befestigungselement gemäß einem der Ansprüche 1 bis 5, **dadurch gekennzeichnet, dass** die vordere Außenkontur (14) und die mittlere Außenkontur (15) im Wesentlichen deckungsgleich (kongruent) sind.

7. Befestigungselement gemäß einem der Ansprüche 1 bis 6, **dadurch gekennzeichnet, dass** die hintere Außenkontur (18) im Wesentlichen elliptisch ist oder dass die Eckpunkte der hinteren Außenkontur (18) auf einer elliptischen Kurve liegen.

8. Befestigungselement gemäß einem der Ansprüche 1 bis 7, **dadurch gekennzeichnet, dass** die hintere Mantelfläche (13) im Haltebereich (17) durch Verbindung der hinteren Außenkontur (18) und der mittleren Außenkontur (15) mittels Geraden gebildet wird.

9. Befestigungselement gemäß einem der Ansprüche 1 bis 8, **dadurch gekennzeichnet, dass** die hintere Mantelfläche (13) und/oder die vordere Mantelfläche (12) in einem Griffbereich (21) eine Griffmulde (20) aufweisen/aufweist, wobei insbesondere der Griffbereich (21) an einer Querseite des Befestigungselements (100, 101, 102, 103) angeordnet ist.

10. Befestigungselement gemäß einem der Ansprüche 1 bis 9, **dadurch gekennzeichnet, dass** das Befestigungselement (100, 101, 102, 103) an seiner Rückseite (2) zumindest ein Mittel (22) zur Erhöhung der Reibung aufweist.

11. Befestigungselement gemäß Anspruch 10, **dadurch gekennzeichnet, dass** das zumindest eine Mittel (22) zur Erhöhung der Reibung eine Rippe (24) ist, wobei insbesondere sich die Rippe (24) radial von der Bohrung (3) zur hinteren Außenkontur (18) erstreckt.

12. Befestigungselement gemäß einem der Ansprüche 1 bis 11, **dadurch gekennzeichnet, dass** das Befestigungselement (100, 101, 102, 103) im Auflagebereich (16) zumindest ein Mittel (25) zur Sicherung gegen Verrutschen aufweist.

13. Befestigungselement gemäß Anspruch 12, **dadurch gekennzeichnet, dass** das zumindest eine Mittel (25) zur Sicherung gegen Verrutschen gegenüber der vorderen Mantelfläche (12) radial vorsteht.

14. Befestigungselement gemäß Anspruch 12 oder 13, **dadurch gekennzeichnet, dass** das zumindest eine Mittel (25) zur Sicherung gegen Verrutschen im Bereich eines längsseitigen Endes des Befestigungselements (100, 101, 102, 103) angeordnet ist.

15. Befestigungselement gemäß Anspruch 12, 13 oder 14, **dadurch gekennzeichnet, dass** das zumindest eine Mittel (25) zur Sicherung gegen Verrutschen ein Zahn (26), Sägezahn oder eine Schneidkante ist.

## Claims

1. Fastening element for the height-adjustable fastening of pictures (200) or picture frames (200), wherein the fastening element (100, 101, 102, 103) has a body (50) with a front side (1), a rear side (2) and a bore (3), wherein the bore (3) penetrates the fastening element (100, 101, 102, 103) along a bore axis (7) from the front side (1) to the rear side (2) and is configured for fastening the fastening element (100, 101, 102, 103) to a wall (200) by means of a fastening means (4) at a rotation angle (8, 8.1, 8.2, 8.3) relative to a vertical direction (11), wherein the body (50) of the fastening element (100, 101, 102, 103)
comprises a front lateral surface (12) which forms a support area (16) of the fastening element (100, 101, 102, 103) for supporting the picture (200) or the picture frame (200) and extends between a front outer contour (14) on the front side (1) and a middle outer contour (15), wherein the front outer contour (14) and the middle outer contour (15) have a different distance from the bore axis (7) at at least two points,
**characterized in that**, the body (50) of the fastening element (100, 101, 102, 103) has a rear lateral surface (13) tapering towards the back side (2), which forms a holding region (17) of the fastening element (100, 101, 102, 103) for gripping and rotating the fastening element (100, 101, 102, 103) around the bore axis (7) with a hand and which extends between a rear outer contour (18) on the back side (2) and the middle outer contour (15).

2. Fastening element according to claim 1, **characterized in that** the front lateral surface (12) is substantially cylindrical.

3. Fastening element according to claim 1 or 2, **characterized in that** the rear outer contour (18) has a smaller diameter, smaller semi-axes or a smaller circumference than the middle outer contour (15) and the front outer contour (14).

4. Fastening element according to one of claims 1 to 3, **characterized in that** the front outer contour (14) and/or the middle outer contour (15) and/or the rear outer contour (18) are elongated along a longitudinal direction (9), whereby in particular the front outer contour (14) and/or the middle outer contour (15) are/is substantially elliptical.

5. Fastening element according to one of claims 1 to 4, **characterized in that** the front outer contour (14) and/or the middle outer contour (15) are formed by a smooth curve.

6. Fastening element according to one of claims 1 to 5, **characterized in that** the front outer contour (14) and the middle outer contour (15) are substantially congruent.

7. Fastening element according to one of claims 1 to 6, **characterized in that** the rear outer contour (18) is substantially elliptical or that the corner points of the rear outer contour (18) lie on an elliptical curve.

8. Fastening element according to one of claims 1 to 7, **characterized in that** the rear lateral surface (13) in the holding region (17) is formed by connecting the rear outer contour (18) and the middle outer contour (15) by means of straight lines.

9. Fastening element according to one of claims 1 to 8, **characterized in that** the rear lateral surface (13) and/or the front lateral surface (12) comprise a grip recess (20) in a grip region (21), whereby the grip region (21) is arranged on a transverse side of the fastening element (100, 101, 102, 103).

10. Fastening element according to one of claims 1 to 9, **characterized in that** the fastening element (100, 101, 102, 103) has on its rear side (2) at least one means (22) for increasing the friction.

11. Fastening element according to claim 10, **characterized in that** the at least one means (22) for increasing friction is a rib (24), wherein in particular the rib (24) extends radially from the bore (3) to the rear outer contour (18).

12. Fastening element according to one of claims 1 to 11, **characterized in that** the fastening element (100, 101, 102, 103) in the support area (16) has at least one means (25) for securing against slipping.

13. Fastening element according to claim 12, **characterized in that** the at least one means (25) for securing against slipping protrudes radially relative to the front lateral surface (12).

14. Fastening element according to claim 12 or 13, **characterized in that** the at least one means (25) for securing against slipping is arranged in the region of a longitudinal end of the fastening element (100, 101, 102, 103).

15. Fastening element according to claim 12, 13 or 14, **characterized in that** the at least one means (25) for securing against slipping is a tooth (26), sawtooth or a cutting edge.

## Revendications

1. Elément de fixation pour la fixation réglable en hauteur de tableaux (200) ou des cadres (200), l'élément de fixation (100, 101, 102, 103) comportant un corps (50) doté d'une face avant (1), d'une face arrière (2) et d'un alésage (3), l'alésage (3) pénétrant dans l'élément de fixation (100, 101, 102, 103) le long d'un axe d'alésage (7) de la face avant (1) à la face arrière (2) et étant conçu pour fixer l'élément de fixation (100, 101, 102, 103) à un mur (200) au moyen d'un moyen de fixation (4) selon un angle de rotation (8, 8.1, 8.2, 8.3) par rapport à une direction verticale (11), le corps (50) de l'élément de fixation (100, 101, 102, 103)
comportant une surface latérale avant (12) qui forme une zone de support (16) de l'élément de fixation (100, 101, 102, 103) pour le support de l'image (200) ou du cadre (200) et s'étend entre un contour extérieur avant (14) sur le côté avant (1) et un contour extérieur médian (15), le contour extérieur avant (14) et le contour extérieur médian (15) présentant une distance différente par rapport à l'axe d'alésage (7) en au moins deux points,
charactérisé en ce que le corps (50) de l'élément de fixation (100, 101, 102, 103) présente en outre une surface d'enveloppe arrière (13) qui se rétrécit vers le côté arrière (2), qui forme une zone de maintien (17) de l'élément de fixation (100, 101, 102, 103) pour saisir et faire tourner l'élément de fixation (100, 101, 102, 103) autour de l'axe d'alésage (7) avec une main et s'étend entre un contour extérieur arrière (18) sur le côté arrière (2) et le contour extérieur médian (15).

2. Elément de fixation selon la revendication 1, **caractérisé en ce que** la surface latérale avant (12) est sensiblement cylindrique.

3. Elément de fixation selon la revendication 1 ou 2, **caractérisé en ce que** le contour extérieur arrière (18) présente un diamètre plus petit, des demi-axes plus petits ou une circonférence plus petite que le contour extérieur médian (15) et le contour extérieur avant (14).

4. Elément de fixation selon l'une des revendications 1 à 3, **caractérisé en ce que** le contour extérieur avant (14) et/ou le contour extérieur médian (15) et/ou le contour extérieur arrière (18) sont allongés le long d'une direction longitudinale (9), en particulier le contour extérieur avant (14) et/ou le contour extérieur médian (15) sont sensiblement elliptique(s).

5. Elément de fixation selon l'une des revendications 1 à 4, **caractérisé en ce que** le contour extérieur avant (14) et/ou le contour extérieur médian (15) sont formés par une courbe lisse.

6. Elément de fixation selon l'une des revendications 1 à 5, **caractérisé en ce que** le contour extérieur avant (14) et le contour extérieur médian (15) sont sensiblement congruents.

7. Elément de fixation selon l'une des revendications 1 à 6, **caractérisé en ce que** le contour extérieur arrière (18) est sensiblement elliptique ou les points d'angle du contour extérieur arrière (18) se trouvent sur une courbe elliptique.

8. Elément de fixation selon l'une des revendications 1 à 7, **caractérisé en ce que** la surface latérale arrière (13) dans la zone de maintien (17) est formée en reliant le contour extérieur arrière (18) et le contour extérieur médian (15) au moyen de lignes droites.

9. Elément de fixation selon l'une des revendications 1 à 8, **caractérisé en ce que** la surface latérale arrière (13) et/ou la surface latérale avant (12) présentent un évidement de préhension (20) dans une zone de préhension (21), en particulier la zone de préhension (21) est disposée sur un côté transversal de l'élément de fixation (100, 101, 102, 103).

10. Elément de fixation selon l'une des revendications 1 à 9, **caractérisé en ce que** l'élément de fixation (100, 101, 102, 103) présente au moins un moyen (22) pour augmenter le frottement sur sa face arrière (2).

11. Élément de fixation selon la revendication 10, **caractérisé en ce que** le ou les moyens (22) pour augmenter le frottement sont une nervure (24), en particulier la nervure (24) s'étend radialement depuis l'alésage (3) jusqu'au contour extérieur arrière (18).

12. Élément de fixation selon l'une des revendications 1 à 11, **caractérisé en ce que** l'élément de fixation (100, 101, 102, 103) dans la zone de support (16) comporte au moins un moyen (25) de fixation contre le glissement.

13. Élément de fixation selon la revendication 12, **caractérisé en ce que** le ou les moyens (25) de fixation contre le glissement font saillie radialement par rapport à la surface latérale avant (12).

14. Élément de fixation selon la revendication 12 ou 13, **caractérisé en ce que** le ou les moyens (25) de fixation contre le glissement sont disposés dans la région d'une extrémité longitudinale de l'élément de fixation (100, 101, 102, 103).

15. Élément de fixation selon la revendication 12, 13 ou 14, **caractérisé en ce que** le ou les moyens (25) de protection contre le glissement sont une dent (26), une dent de scie ou un tranchant.
